# EUROPEAN PATENT SPECIFICATION

(11) **EP 3 993 649 B1**
(45) Date of publication and mention of the grant of the patent: **08.10.2025**
(21) Application number: 20735185.9
(22) Date of filing: 01.07.2020
(51) Int. Cl.: A24F 40/46, A24F 40/50, A24F 40/20

(54) **AEROSOL-GENERATING ARTICLE HAVING AN ADJUSTABLE HEATING AREA**
AEROSOLERZEUGENDER ARTIKEL MIT EINSTELLBAREM HEIZBEREICH
ARTICLE DE GÉNÉRATION D'AÉROSOLS DOTÉ D'UNE ZONE DE CHAUFFAGE RÉGLABLE

(30) Priority: 03.07.2019 EP 19184261
(43) Date of publication of application: 11.05.2022
(73) Proprietor: Philip Morris Products S.A., 2000 Neuchâtel (CH)
(72) Inventor: NICOLAS, Frederic, 44000 Nantes (FR)
(74) Representative: Reddie & Grose LLP
(86) International application number: PCT/EP2020/068560
(87) International publication number: WO 2021/001443

(56) References cited:
- EP-A2- 0 438 862
- EP-B1- 0 438 862
- WO-A1-2017/153467
- US-A- 5 666 978
- US-A1- 2014 060 554

## Description

The present invention relates to an aerosol-generating article. In particular, but not exclusively, one or more embodiments of the present invention relate to an aerosol-generating article comprising a heater assembly which is able to selectively adjust the area of the heater assembly used for heating. The present invention also relates to a device for adjusting the area of the heater assembly and an aerosol-generating device and an aerosol-generating system for use with the aerosol-generating article.

Handheld electrically operated aerosol-generating devices and systems are known that consist of a device portion comprising a battery and control electronics, a portion for containing or receiving an aerosol-forming substrate and an electrically operated heater for heating the aerosol-forming substrate to generate an aerosol. A mouthpiece portion is also included on which a user may puff or draw to deliver aerosol into their mouth.

Some devices and systems use a liquid aerosol-forming substrate or e-liquid stored in a liquid storage portion. Such devices typically use a wick to carry the liquid aerosol-forming substrate from the liquid storage portion to the heater where it is aerosolised. A problem with such devices is that they may not provide accurate measurements of the amount of aerosol generated during use and, in particular, the amount of aerosol generated per puff. Consequently, a user does not have insight into their consumption of aerosol or the various components in the aerosol, which therefore makes it difficult for a user to control the amount of aerosol or aerosol components they receive per unit of time or per puff. Whilst the total amount of liquid aerosol-forming substrate in the liquid storage portion may be known and therefore the total quantity of aerosol received once the liquid storage portion is empty can be roughly estimated, such systems and devices do not provide an indication of the amount of aerosol received per puff or draw.

There are a number of parameters which determine the quantity of aerosol generated per puff in a device using a liquid aerosol-forming substrate, for example, the amount of liquid reaching the heating area, which is related to the capillarity effect of the wick, the thickness of the wick, the distance from the liquid storage portion to the heater and the viscosity of the liquid. Further parameters which affect the amount of aerosol generated include, the reactivity of the device to a puff command, how quickly the heater reaches its working temperature and the value of such working temperature. In addition to these intrinsic parameters of the device, other parameters relating to the condition and use of the device also have an impact on the amount of aerosol generated, for example, the physical orientation of the device, the remaining quantity of liquid in the liquid storage portion (which affects the length of the travel of liquid in the wick and whether the wick is wet or dry), the duration of time since the device was previously used, the duration of the puff and the ambient temperature. Such parameters make it difficult to determine reliably the amount of aerosol or aerosol components consumed per puff or draw.

Other types of aerosol-generating devices and systems use a solid aerosol-forming substrate such as a tobacco material. Such devices may comprise a recess for receiving a cigarette-shaped rod comprising folded or crimped and gathered sheets of such a tobacco material. A blade-shaped heater arranged in the recess is inserted into the centre of the rod as the rod is received in the recess. The heater is configured to heat the tobacco material to generate an aerosol.

The amount of aerosol generated by such devices is also determined by certain parameters, for example, the density distribution of the tobacco sheets around the heater, the orientation of the folded tobacco sheets relative to the heater and the way in which heat spreads into the tobacco rod and the duration of use. The tobacco sheets closest to the heater blade may be heated differently from the tobacco sheets furthest from the heater, which may result in a variability of the amount of aerosol generated over time as well as possible overheating of the tobacco sheets closest to the heater.

US 5,666,978 A describes a smoking system in which a replaceable cigarette containing tobacco flavour material is electrically heated by a set of electrical heater elements contained within a lighter to evolve tobacco flavours or other components in vapor or aerosol form for delivery to a smoker. Each of the heater elements is connected to a corresponding field effect transistor heater switch. Individual heater switches can be turned on under control of a logic circuit.

US 2014/060554 A1 describes an electronic smoking article comprising an aerosol precursor composition and a plurality of microheaters in contact with the aerosol precursor composition. The plurality of microheaters can be serially aligned within the smoking article and heated in a defined order or pattern. In one arrangement, a bank of microheaters is sandwiched between first and second layers of a substrate. One of the first and second layers comprises a porous material that functions as a reservoir for the aerosol precursor composition. An individual microheater can be activated to aerosolize the aerosol precursor composition in the area proximate the microheater.

EP 0,438,862 A2 describes an electrically-powered heating element for use within a smoking device. The heating element has a plurality of discrete resistive heating segments, only one of which is active at any given time. The heating element is contained within the device so that the individual heating segments of the element are adjacent to a flavour-generating medium. As each segment of the heating element is provided with power, the flavour-generating medium adjacent to that segment is heated, which causes the flavour-generating medium to produce a flavour, aerosol, or vapor, which the consumer of the device can inhale.

It would be desirable to provide an aerosol-generating article which provides reliable control over the amount of aerosol generated. It would be desirable to provide an aerosol-generating article which would allow a user to accurately determine their consumption of aerosol or their consumption of one or more aerosol component. It would be desirable to provide an aerosol-generating device which provides reliable control over the amount of aerosol generated. It would be desirable to provide an aerosol-generating device which would allow a user to accurately determine their consumption of aerosol or their consumption of one or more aerosol component. It would be desirable to provide an aerosol-generating system which provides reliable control over the amount of aerosol generated. It would be desirable to provide an aerosol-generating system which would allow a user to accurately determine their consumption of aerosol or their consumption of one or more aerosol component.

In some example embodiments, the area of a heater assembly available for heating is selectively adjusted to a specific size before heating of the heater assembly commences.

According to the present invention, there is provided an aerosol-generating article comprising: an aerosol-forming substrate; and a heater assembly arranged to heat the aerosol-forming substrate, the heater assembly comprising an array of heating elements; wherein a plurality of the heating elements of the array each comprise at least one circuit-breaker component; wherein each of the circuit-breaker components is individually activatable to selectively deactivate an area of the heater assembly prior to heating such that, upon heating, the aerosol-generating article selectively heats a portion of the aerosol-forming substrate corresponding to a non-deactivated part of the heater assembly.

As used herein, the term "aerosol-generating article" refers to an article comprising an aerosol-forming substrate that, when heated, releases one or more volatile compounds that can form an aerosol. An aerosol-generating article is separate from and configured for combination with an aerosol-generating device for heating the aerosol-generating article.

As used herein, the term "aerosol-forming substrate" relates to a substrate capable of releasing one or more volatile compounds that may form an aerosol. Such volatile compounds may be released by heating the aerosol-forming substrate.

As used herein, the term "circuit-breaker component" refers to a component which can be activated, or which can respond to a certain circuit condition, to break an electric circuit. The circuit-breaker component may break an electric circuit to prevent an electric current from continuing to pass through the part of the electric circuit where the circuit-breaker component is located.

The aerosol-generating article allows the area of a heater assembly available for heating to be selectively adjusted to a specific size before heating of the heater assembly commences. During heating, only the portion of the aerosol-forming substrate corresponding to the non-deactivated part of the heater assembly is heated. The aerosol-generating article therefore provides customisable and reliable control over the amount of aerosol generated. Furthermore, it allows a user to accurately determine their consumption of aerosol or their consumption of one or more aerosol component.

The array of heating elements comprises a two-dimensional array of heating elements. As used herein, the term "a two-dimensional array of heating elements" refers to an arrangement comprising at least two heating elements arranged sequentially in a first dimension or direction and at least two heating elements arranged sequentially in a second dimension or direction. The at least two heating elements in the first dimension or direction intersect the at least two heating elements in the second dimension or direction.

The two-dimensional array of heating elements comprise a plurality of first heating elements extending in a first direction and a plurality of second heating elements extending in a second direction. The second direction is transverse to the first direction such that the plurality of second heating elements intersect the plurality of first heating elements. The first and second heating elements are electrically connected at their points of intersection.

The two-dimensional array of heating elements may comprise a grid. The two-dimensional array of heating elements may comprise a mesh.

The circuit-breaker components may comprise fusible regions which are configured to melt at a predetermined temperature to break the heating element. In some embodiments, each of the circuit-breaker components comprises a fusible region which is configured to melt at a predetermined temperature to break the heating element. Preferably, the predetermined temperature is a temperature lower than a temperature at which one or more components of the aerosol-forming substrate are volatilised. Advantageously, the heating fusible region may be heated to melt before heating the aerosol-forming substrate. This may be achieved without heating the aerosol-forming substrate to an undesirable extent, i.e. to a temperature at which the aerosol-forming substrate starts to vaporise.

As used herein, the term "fusible region" refers to a region of an electrical conductor which is configured to break or melt at a predetermined temperature to break the electrical conductor and prevent electric current from passing through at least a portion of the electrical conductor. The terms "fusible region" and "fuse spot" are used herein interchangeably to mean the same thing.

Advantageously, the use of fusible regions as circuit-breaker components provides an effective way for deactivating an area of the heater assembly prior to heating.

The fusible regions may have a relatively smaller or thinner thickness than the heating elements. The thickness of the fusible regions may be at least three times thinner than the heating elements. Preferably, the thickness of the fusible regions may be at least five times thinner than the heating elements. Preferably, the thickness of the fusible regions may be at least ten times thinner than the heating elements. Preferably, the thickness of the fusible regions may be at least fifteen times thinner than the heating elements.

The fusible regions may comprise a material having a lower electrical resistance than the heating elements. The fusible regions may comprise one of, or an alloy of, silver, tin, zinc, copper or aluminium.

The fusible regions may comprise metallic nanoparticles arranged to receive light from a light source and generate heat by surface plasmon resonance to raise the temperature of the fusible region to the predetermined temperature.

As used herein, the term "metallic nanoparticles" refers to metallic particles having a maximum diameter of about 1 micrometre or less. Metallic nanoparticles that generate heat by surface plasmon resonance when excited by incident light may also be known as plasmonic nanoparticles.

As used herein, the term "surface plasmon resonance" refers to a collective resonant oscillation of free electrons of the metallic nanoparticles and thus polarization of charges at the surface of the metallic nanoparticles. The collective resonant oscillation of the free electrons and thus polarisation of charges is stimulated by light incident on the metallic nanoparticles from a light source. Energy from the oscillating free electrons may be dissipated by several mechanisms, including heat. Therefore, when the metallic nanoparticles are irradiated with a light source, the metallic nanoparticles generate heat by surface plasmon resonance.

An advantage of using metallic nanoparticles to generate heat by surface plasmon resonance is that it is not necessary to connect the heater assembly to an electrical power supply but instead a light source can be used to quickly and efficiently activate the fusible regions. Furthermore, the heat generated is focussed in the relatively small area of the fusible region and there is less likelihood of damaging or degrading the aerosol-forming substrate.

The metallic nanoparticles may comprises at least one of gold, silver, platinum, copper, palladium, aluminium, chromium, titanium, rhodium, and ruthenium. The metallic nanoparticles may comprise at least one metal in elemental form. The metallic nanoparticles may comprise at least one metal in a metallic compound. The metallic compound may comprise at least one metal nitride.

Preferably, the metallic nanoparticles comprises at least one of gold, silver, platinum, and copper. Advantageously, gold, silver, platinum, and copper nanoparticles may exhibit strong surface plasmon resonance when irradiated with visible light.

The metallic nanoparticles may comprise a single metal. The metallic nanoparticles may comprise a mixture of different metals.

The metallic nanoparticles may comprise a plurality of first nanoparticles comprising a first metal and a plurality of second nanoparticles comprising a second metal.

At least some of the metallic nanoparticles may each comprise a mixture of two or more metals. At least some of the metallic nanoparticles may comprise a metal alloy. At least some of the metallic nanoparticles may each comprise a core-shell configuration. The core of the core-shell may comprise a first metal and the shell or the core-shell may comprise a second metal.

Preferably the metallic nanoparticles comprise a number average maximum diameter that is less than or equal to the peak emission wavelength of the light source.

The plurality of metallic nanoparticles may comprise a number average maximum diameter of less than about 700 nanometres. Preferably, the plurality of metallic nanoparticles may comprise a number average maximum diameter of less than about 600 nanometres. Preferably, the plurality of metallic nanoparticles may comprise a number average maximum diameter of less than about 500 nanometres. Preferably, the plurality of metallic nanoparticles may comprise a number average maximum diameter of less than about 400 nanometres. Preferably, the plurality of metallic nanoparticles may comprise a number average maximum diameter of less than about 300 nanometres. Preferably, the plurality of metallic nanoparticles may comprise a number average maximum diameter of less than about 200 nanometres. Preferably, the plurality of metallic nanoparticles may comprise a number average maximum diameter of less than about 150 nanometres. Preferably, the plurality of metallic nanoparticles may comprise a number average maximum diameter of less than about 100 nanometres.

The metallic nanoparticles may be coated on the fusible region.

Each fusible region may be located between two points of intersection of the heating elements of the array. This maintains the electrical circuit at the points of intersection and allows for areas of the heater assembly to be deactivated more selectively.

Alternatively, each fusible region may be located at a point of intersection of the array. The fusible region at the point of intersection can be activated to prevent an electrical current flowing into or out of a particular point of intersection during heating.

At least a proportion of the fusible regions may be arranged to surround a predetermined area of the heater assembly to be deactivated. The fusible regions may be arranged to surround a predetermined area of the heater assembly to be deactivated. For example, if it is known that in certain circumstances it would be desirable to generate twenty-five percent less aerosol, the fusible regions could be arranged to surround an area constituting twenty-five percent of the overall area of the heater assembly. This therefore provides an efficient method to customise the aerosol-generating article to generate the required amount of aerosol.

The heater assembly may comprise a fusible region between each and every point of intersection of the heating elements of the two-dimensional array. Advantageously, this arrangement allows for the heater assembly to be fully customisable.

The circuit-breaker components may comprise an electrical fuse formed of a fuse material. Examples of fuse materials include but are not limited to silver, tin, zinc, copper or aluminium.

The aerosol-generating article may further comprise a mask arranged to cover the heater assembly, wherein the mask comprises a pattern of holes or transparencies. The holes or transparencies may be arranged such that only fusible regions at locations corresponding to the locations of the holes or transparencies in the mask are exposed. The exposed locations may therefore remain activatable, for example, when exposed to a light source.

As used herein, the term "mask" refers to an opaque plate, cover or sheet having a defined pattern of holes or transparencies formed therein such that light is allowed to shine through only in accordance with the defined pattern.

An advantage of using a mask is that this avoids the need to use a moveable directional light source to target individual fusible regions. The entire aerosol-generating article can be exposed to a fixed light source and the pattern in the mask used to activate the required fusible regions. This may simplify the devices used to customise the aerosol-generating articles.

The mask may comprise a sticker which can removably applied to the heater assembly.

According to the present invention, there is provided a device for use with the aerosol-generating article described above, wherein the device is configured to receive the aerosol-generating article, the device comprising: control circuitry; and an activation device for activating the circuit-breaker components; wherein the control circuitry is configured to control the activation device to activate one or more of the circuit-breaker components when an aerosol-generating article is received in the device such that a selected area of the heater assembly is deactivated prior to heating.

The device provides a means for selectively adjusting the area of a heater assembly comprising circuit-breaker components prior to heating. This allows the aerosol-generating article to be customised to reliably control the amount of aerosol generated. Furthermore, it allows a user to accurately determine their consumption of aerosol or their consumption of one or more aerosol component.

The activation device may comprise a light source and the control circuitry may be configured to control the light source to expose one or more of the fusible regions to light when an aerosol-generating articles as described above is received in the device such that heat is generated in one or more of the fusible regions by surface plasmon resonance to raise the temperature of the fusible region to a predetermined temperature at which the fusible region melts to break the heating element.

An advantage of using a light source to generate heat by surface plasmon resonance is that it is not necessary to connect the heater assembly to an electrical power supply. Furthermore, the heat generated is focussed in the relatively small area of the fusible region and there is less likelihood of damaging or degrading the aerosol-forming substrate.

The light source may be a light emitting diode. Advantageously, light emitting diodes have a compact size and are capable of emitting light at the required wavelengths.

The light source may have a beam angle sufficient to expose the entire heater assembly when it is emitting light.

The light source may be a directional light source. The light source may be a laser or a laser diode. Advantageously, laser diodes are compact in size and can emit directional light at the required wavelength which can be directed at a fusible region. The light source may be mounted on actuators so that it can be scanned over the heater assembly to activate the fusible regions.

The light source may be configured to emit at least one of ultraviolet light, infrared light and visible light. Preferably, the light source is configured to emit visible light. Advantageously, a light source configured to emit visible light may be inexpensive, convenient to use, or both.

Preferably, the light source is configured to emit light comprising at least one wavelength between 380 nanometres and 700 nanometres.

Preferably, the light source is configured for a peak emission wavelength of between about 495 nanometres and about 580 nanometres. As used herein, "peak emission wavelength" refers to the wavelength at which a light source exhibits maximum intensity. Advantageously, a peak emission wavelength of between about 495 nanometres and about 580 nanometres may provide maximum heating of the heating element by surface plasmon resonance, particularly when the plurality of metallic nanoparticles comprises at least one of gold, silver, platinum, and copper.

The light source may be arranged within the device.

The device may be configured to receive light from an external light source. An external light source may comprise ambient light. Ambient light may comprise solar radiation. Ambient light may comprise at least one artificial light source external to the aerosol-generating device. The device may have an optical conduit to direct light from an external light source into the device and to a location where it can expose the heater assembly.

The activation device may comprise two spaced apart electrical probes. The electrical probe may be configured to contact the heater assembly such that each probe is located either side of a fusible region. The electrical probe may be configured to deliver an electric current to the fusible region which is sufficient to melt the fusible region.

The device may be an aerosol-generating device further comprising a power source. The control circuitry may be configured to control a supply of power from the power source to the heater assembly when an aerosol-generating article is received in the device to selectively heat a portion of the aerosol-forming substrate corresponding to a non-deactivated part of the heater assembly.

As used herein, an "aerosol-generating device" relates to a device that may interact with an aerosol-forming substrate to generate an aerosol.

The aerosol-generating device provides a means for selectively adjusting the area of a heater assembly comprising circuit-breaker components prior to heating. During heating, only the portion of the aerosol-forming substrate corresponding to the non-deactivated part of the heater assembly is heated. The aerosol-generating device therefore provides customisable and reliable control over the amount of aerosol generated. Furthermore, it allows a user to accurately determine their consumption of aerosol or their consumption of one or more aerosol component.

The control circuitry may comprise a communication module configured to receive information from a user or another user device. Such information may include, but is not limited to, details of the area of the heater assembly to deactivate or details of specific fusible regions to activate or both. The communication module may be a wired communication module, for example, Universal Serial Bus, or a wireless communication module, for example, Wi-Fi^{™} or Bluetooth^{™}. The communication module may be connected to a user interface to allow the user to input the information directly to the device.

According to the present disclosure, there is provided an aerosol-generating system comprising an aerosol-generating article and an aerosol-generating device as described above.

As used herein, the term "aerosol-generating system" refers to a combination of an aerosol-generating device and one or more aerosol-forming substrates or aerosol-generating articles for use with the device. An aerosol-generating system may include additional components, such as a charging unit for recharging an on-board electric power supply in an electrically operated or electric aerosol-generating device.

In some example embodiments, parts of the heater assembly could be selectively activated during heating of the heater assembly.

According to the present invention, there is provided an aerosol-generating system comprising: an aerosol-forming substrate; and a heater assembly arranged to heat the aerosol-forming substrate, the heater assembly comprising a two-dimensional array of heating elements; wherein the system further comprises: a power source; an electronic switch for each of the heating elements, each electronic switch being connected to its respective heating element and the power source to control a flow of electrical current through its respective heating element; and control circuitry; wherein the control circuitry is configured to control a supply of electrical current from the power source to the heater assembly by controlling the activation of each of the electronic switches individually such that an area of the heater assembly can be selectively activated during heating to heat a portion of the aerosol-forming substrate corresponding to the activated part of the heater assembly; wherein the array of heating elements comprises a two-dimensional array of heating elements having a plurality of first heating elements extending in a first direction and a plurality of second heating elements extending in a second direction, wherein the second direction is transverse to the first direction such that the plurality of second heating elements intersect the plurality of first heating elements, and wherein the first and second heating elements are electrically connected at their points of intersection; and wherein an area of the heater assembly is selectively activated by activating one of the electronic switches connected to a first heating element in combination with one of the electronic switches connected to a second heating element.

The aerosol-generating system allows the area of the heater assembly to be selectively adjusted during heating. The aerosol-generating system therefore provides customisable and reliable control over the amount of aerosol generated. Furthermore, it allows a user to accurately determine their consumption of aerosol or their consumption of one or more aerosol component.

The two-dimensional array of heating elements may comprise a grid. The two-dimensional array of heating elements may comprise a mesh.

An area of the heater assembly is selectively activated by activating one of the electronic switches connected to a first heating element in combination with one of the electronic switches connected to a second heating element.

Advantageously, selecting an area of the heater assembly to be heated by activating one of the electronic switches connected to a first heating element and one of the electronic switches connected to a second heating element provides an effective way of addressing an area of the heater assembly to be activated because the electronic switches connected to the first and second heating elements provide a form of coordinate system. Furthermore, it provides a convenient way of monitoring which areas of the heater assembly have already been activated because information relating to areas which have been activated during a heating operation can be stored in a memory.

In one example embodiment, the aerosol-forming substrate, heater assembly and electronic switches may form part of an aerosol-generating article and the power source and the control circuitry may form part of an aerosol-generating device configured to receive the aerosol-generating article. In such an embodiment, the aerosol-generating device may comprise an electrical contact for each of the electronic switches. Each electrical contact may be arranged to electrically connect to its respective electronic switch when the aerosol-generating article is received in the aerosol-generating device.

Advantageously, locating the electronic switches in the aerosol-generating article simplifies the design and manufacturing cost of the aerosol-generating device. In this arrangement, all the components required for the operation of the heater assembly are then located in the aerosol-generated article such that it is a standalone unit and all the device has to provide is connection to the control circuitry. Furthermore, it would make it more difficult to use counterfeit or sub-standard aerosol-generating articles in the aerosol-generating device due to the increased complexity involved in manufacturing the aerosol-generating article.

In another example embodiment, the aerosol-forming substrate forms at least part of an aerosol-generating article and the heater assembly, electronic switches, power source and the control circuitry form part of an aerosol-generating device configured to receive the aerosol-generating article.

Advantageously, locating the heater assembly and electronic switches in the aerosol-generating device reduces the complexity and manufacturing cost of the aerosol-generating article.

Each electronic switch may comprise a transistor. Advantageously, transistors are suitably small to be incorporated, for example, into aerosol-generating articles and can be readily interfaced to, and controlled by, control circuitry. Any suitable type of transistor may be used including, but not limited to, bipolar transistors and field effect transistors.

The aerosol-forming substrate may be in contact with the heater assembly. An advantage of placing the aerosol-forming substrate in contact with the heater assembly is that it may assist in conducting heat from the heater assembly to the aerosol-forming substrate which may result in the more efficient generation of aerosol.

The aerosol-forming substrate may be coated on the heater assembly. Coating the aerosol-forming substrate on the heater assembly may provide an effective way of contacting the aerosol-forming substrate with the heater assembly and is straightforward to incorporate into a high speed manufacturing process. Furthermore, the quantity of aerosol-forming substrate coated on a length of a heating element can be accurately determined such that the amount of aerosol that will be generated by that length of heating element during heating can also be accurately determined.

The aerosol-forming substrate may extend across the heater assembly. In some embodiments, the aerosol-forming substrate may be substantially flat. In some embodiments, the aerosol-forming substrate may be shaped as a tablet having a first and second major surfaces and thickness between the major surfaces which is small relative to the length and width of the aerosol-forming substrate.

The aerosol-forming substrate may be divided into units and each unit may correspond to an activatable area of the heater assembly.

An advantage of dividing the aerosol-forming substrate into units is that it may assist in reliably controlling the amount of aerosol generated. The amount of aerosol which can be generated by a single unit is either known or can be determined. Preferably, the amount of aerosol generated by a single unit is less than the amount of aerosol required for one puff or draw by a user. Preferably, the amount of aerosol generated by a single unit is a fraction of the amount of aerosol required for one puff or draw. Consequently, generating the requisite amount of aerosol for a particular user's puff or draw simply involves determining the number of units required to fulfil the requisite amount of aerosol and activating the parts of the heater assembly corresponding to the units. This arrangement allows a user to accurately determine their consumption of aerosol or their consumption of one or more aerosol component. The units for generating the requisite amount of aerosol may be heated successively or simultaneously.

Each unit of the aerosol-forming substrate may be separated from its neighbouring units by a thermal insulation material. This arrangement may assist in reducing heat transfer from a unit that is being currently heated to neighbouring units which are not. Therefore, such an arrangement may reduce the risk of thermal degradation of the aerosol-forming substrate of neighbouring units.

The aerosol-forming substrate may comprise a solid. The aerosol-forming substrate may comprise a liquid. The aerosol-forming substrate may comprise a gel. The aerosol-forming substrate may comprise any combination of two or more of a solid, a liquid and a gel.

The aerosol-forming substrate may comprise nicotine, a nicotine derivative or a nicotine analogue. The aerosol-forming substrate may comprise one or more nicotine salt. The one or more nicotine salt may be selected from the list consisting of nicotine citrate, nicotine lactate, nicotine pyruvate, nicotine bitartrate, nicotine pectates, nicotine alginates, and nicotine salicylate.

The aerosol-forming substrate may comprise an aerosol former. As used herein, an "aerosol former" is any suitable known compound or mixture of compounds that, in use, facilitates formation of a dense and stable aerosol and that is substantially resistant to thermal degradation at the operating temperature of the aerosol-generating article. Suitable aerosol-formers are well known in the art and include, but are not limited to: polyhydric alcohols, such as triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as triethylene glycol, 1,3-butanediol and glycerine.

The aerosol-forming substrate may further comprise a flavourant. The flavourant may comprise a volatile flavour component. The flavourant may comprise menthol. As used herein, the term 'menthol' denotes the compound 2-isopropyl-5-methylcyclohexanol in any of its isomeric forms. The flavourant may provide a flavour selected from the group consisting of menthol, lemon, vanilla, orange, wintergreen, cherry, and cinnamon. The flavourant may comprise volatile tobacco flavour compounds which are released from the substrate upon heating.

The aerosol-forming substrate may further comprise tobacco or a tobacco containing material. For example, the aerosol-forming substrate may comprise any of: tobacco leaf, fragments of tobacco ribs, reconstituted tobacco, homogenised tobacco, extruded tobacco, tobacco slurry, cast leaf tobacco and expanded tobacco. Optionally, the aerosol-forming substrate may comprise tobacco powder compressed with an inert material, for example, glass or ceramic or another suitable inert material.

In cases where the aerosol-forming substrate comprises a liquid or a gel, in some embodiments, the aerosol-generating article may comprise an absorbent carrier. The aerosol-forming substrate may be coated on or impregnated into the absorbent carrier. For example, the nicotine compound and the aerosol-former may be combined with water as a liquid formulation. The liquid formulation may, in some embodiments, further comprise a flavourant. Such a liquid formulation may then be absorbed by the absorbent carrier or coated onto the surface of the absorbent carrier. The absorbent carrier may be a sheet or tablet of cellulosic-based material onto which the nicotine compound and the aerosol former may be coated or absorbed. The absorbent carrier may be a metallic, polymer or vegetal foam having liquid retaining and capillary properties and onto which the liquid or gel aerosol-forming substrate is coated or absorbed.

There may be different categories of aerosol-generating article, each providing a different user experience. For example, the different categories may comprise articles having different recipes or compositions of aerosol-forming substrates, different concentrations of nicotine or other components and different quantities or thicknesses of aerosol-forming substrate. Aerosol-generating articles belonging to the same category may have the same shape, size or colour to make them identifiable to a user or to an aerosol-generating system or device. An aerosol-generating system or device may be configured to only accept a certain category of aerosol-generating article, for example, by having a recess or space which is shaped or sized to receive only a particular type of aerosol-generating article. The recess or space may be keyed to only receive a complementarily shaped aerosol-generating article.

The aerosol-generating article may comprise different types of aerosol-forming substrate. For example, one type of aerosol-forming substrate may comprise nicotine. Another type of aerosol-forming substrate may comprise flavourings. The different types of aerosol-forming substrate may be contained in different units. Aerosols from the different types of aerosol-forming substrates may be delivered to a user as a mixture. The exact composition of the mixture can be determined by activating the different parts of the heater assembly corresponding to the desired units. This arrangement also allows the composition of the resulting aerosol to be changed during a user session over time. For example, initial puffs may comprise aerosol generated from units containing nicotine whereas the number of nicotine-containing units aerosolised for later puffs may be reduced.

The aerosol-generating article or the aerosol-generating device may comprise a plurality of heater assemblies. Each heater assembly may comprise an array of heating elements. The aerosol-generating article may comprise two heater assemblies with an aerosol-forming substrate arranged between the heater assemblies. The aerosol-generating device may comprise two heater assemblies and be configured to receive the aerosol-forming substrate between the heater assemblies.

Each heating element may comprise an electrically resistive heating element. Each heating element may comprise an electrically resistive material. Suitable electrically resistive materials include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum platinum, gold and silver. Examples of suitable metal alloys include stainless steel, nickel-, cobalt-, chromium-, aluminium- titanium- zirconium-, hafnium-, niobium-, molybdenum-, tantalum-, tungsten-, tin-, gallium-, manganese-, gold- and iron-containing alloys, and super-alloys based on nickel, iron, cobalt, stainless steel, Timetal^{®} and iron-manganese-aluminium based alloys. In composite materials, the electrically resistive material may optionally be embedded in, encapsulated or coated with an insulating material or vice-versa, depending on the kinetics of energy transfer and the external physicochemical properties required.

The device may comprise a housing. The housing may comprise a space or recess for receiving the aerosol-generating article. The housing may comprise a main body portion. The main body portion may comprise the power source. The main body portion may comprise the control circuitry. The housing may comprise a mouthpiece or mouthpiece portion. The air inlet may be arranged at a point along a length of the housing. The air outlet may be arranged at a mouth end of the mouthpiece. In this way a user may be able to puff or draw on an aerosol via the air outlet, which may be formed at or in the mouthpiece portion. The mouthpiece portion may be separable from the main body portion.

The control circuity may be configured to control the supply of power to the heater assembly from the power source. The control circuitry may comprise a microprocessor, a programmable microprocessor, a microcontroller, or an application specific integrated chip (ASIC) or other electronic circuitry capable of providing control. The control circuitry may comprise further electronic components. For example, in some embodiments, the control circuitry may comprise any of: sensors, switches, display elements. Power may be supplied to the heating element for the duration of a puff either continuously or in the form of pulses of electrical current. The power source may be a DC power source. The power source may comprise at least one battery. The at least one battery may include a rechargeable lithium ion battery. As an alternative, the power source may be another form of charge storage device such as a capacitor.

Features described in relation to one or more examples of the present disclosure may equally be applied to other examples of the invention. In particular, features described in relation to an aerosol-generating system may be equally applied to an aerosol-generating article or aerosol-generating device and *vice versa.*

Embodiments of the invention will now be described, by way of example only, with reference to the accompanying drawings, in which:
Figure 1 is a schematic plan view of an aerosol-generating article in accordance with an embodiment of the present invention.
Figure 2 is a schematic side view of the aerosol-generating article of Figure 1.
Figure 3 is an enlarged view of a fusible region located at a point along the length of a heating element.
Figure 4 is a schematic side view of a device in accordance with an embodiment of the present invention which device is configured to selectively activate the circuit-breaker components of the aerosol-generating article of Figure 1 prior to heating.
Figure 5 is a schematic side view of an aerosol-generating device in accordance with an embodiment of the present invention.
Figure 6 is a schematic view of part an aerosol-generating system in accordance with an embodiment of the present invention showing part of a heater assembly and associated control circuitry.
Figure 7A is a schematic view of part an aerosol-generating system in accordance with an embodiment of the present invention showing a heater assembly and the corresponding units of an aerosol-forming substrate which can be heated by the heater assembly.
Figure 7B is an enlarged view of the bottom left-hand corner of the heater assembly shown in Figure 7A.
Figure 8 is a schematic plan view of an aerosol-generating system in accordance with an embodiment of the present invention comprising an aerosol-generating article and an aerosol-generating device for use with the aerosol-generating article. For clarity, the aerosol generating article is drawn to a larger scale than the aerosol-generating device.
Figures 9 is a schematic plan view of an aerosol-generating system in accordance with another embodiment of the present invention comprising an aerosol-generating article and an aerosol-generating device for use with the aerosol-generating article. For clarity, the aerosol generating article is drawn to a larger scale than the aerosol-generating device.

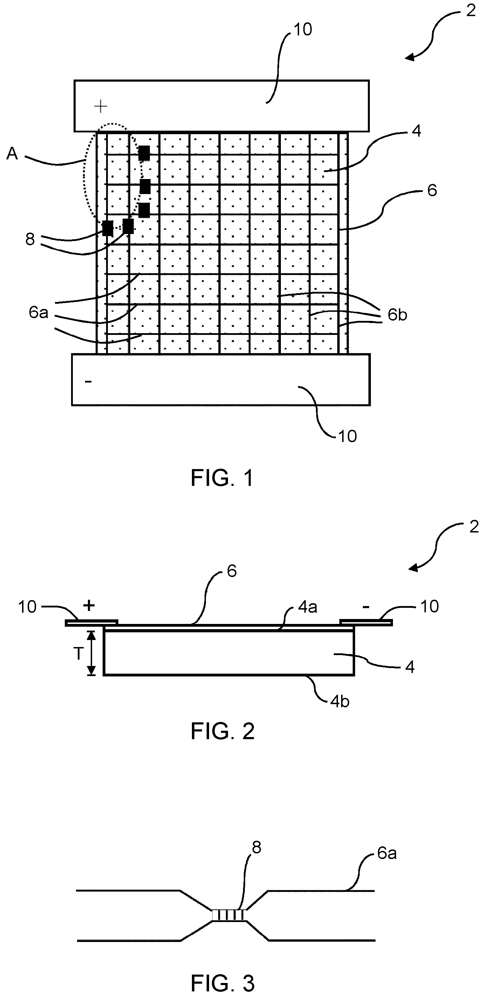

Figure 1 shows an aerosol-generating article 2 comprising an aerosol-forming substrate 4 and a heater assembly 6. The heater assembly 6 comprises a two-dimensional array or grid of heating elements comprising a plurality of first heating elements 6a extending in a first direction across the aerosol-forming substrate 4 and a plurality of second heating elements 6b extending in a second direction across the aerosol-forming substrate 4, which second direction is substantially orthogonal to the first direction such that the plurality of first heating elements 6a intersect the plurality of second heating elements 6b. The first 6a and second 6b heating elements are electrically connected at their points of intersection.

The heating elements 6a, 6b are electrically resistive heating elements which generate heat when an electrical current passes through them due to the Joule effect. In this embodiment, the heating elements 6a, 6b are formed of a Nickel-chrome (NiCr) alloy. The heater assembly 6 is in contact with the aerosol-forming substrate so that heat generated in the heating elements 6a, 6b is conducted and radiated into the aerosol-forming substrate 4 to cause a portion of the aerosol-forming substrate in the vicinity of a heating element to vaporise and form an aerosol.

The heater assembly 6 comprises fuse spots or fusible regions 8 which are located between the points of intersection of the first 6a and second 6b heating elements and can be individually activated to break the electrical circuit through the heating element 6a, 6b at the location of the fusible region 8. The fusible regions 8 therefore act as circuit-breaker components. In Figure 1, five such fusible regions are shown which define an area A of the heater assembly 6 which is to be deactivated or electrically isolated from the rest of the heater assembly 6 prior to heating such that only the remaining non-deactivated part of the heater assembly 6 is heated during a subsequent heating operation. Consequently, only the portion of the aerosol-forming substrate corresponding to the non-deactivated part of the heater assembly 6 is vaporised. The fusible regions 8 can therefore be used to selectively adjust the area of the heater assembly 6 which is heated during a heating operation to selectively adjust the amount of aerosol generated.

The aerosol-generating article 2 also comprises a pair of electrical contact pads 10; one for connecting to the positive terminal of an electrical power source and the other for connecting to the negative or ground terminal of an electrical power source. The electrical contact pads 10 are arranged to connect to a pair of corresponding electrical contacts in an aerosol-generating device so that power can be supplied to the heater assembly 6. In use, an electrical current flows the heater assembly 6 between the electrical contacts 10 to generate heat in the heating elements 6a, 6b.

Referring to Figure 2, this shows a side view of the aerosol-generating article 2 of Figure 1. As can be seen from Figures 1 and 2, the aerosol-forming substrate 4 is formed as a tablet having a first major surface 4a and an opposing second major surface 4b. The thickness T of the aerosol-forming substrate is small relative to the length and width of the aerosol-forming substrate 4. Any suitable aerosol-forming substrate 4 could be used. For example, the aerosol-forming substrate 4 could be a solid tablet comprising tobacco cast leaves or the aerosol-forming substrate 4 could comprise a polymer or metallic foam which is impregnated with a liquid or gel or a combination of both containing one or more additives such as aerosol formers, nicotine and flavourings. The heater assembly 6 is in contact with the first major surface 4a of the aerosol-forming substrate 4.

Figure 3 shows an enlarged view of one of the fusible regions 8 located along the length of one of the first heating elements 6a of Figure 1. The fusible region 8 is formed of a thin wire of a low resistance electrical material, such as an alloy of zinc and aluminium, that is configured to melt at a predetermined temperature, which is above the temperature to which the heater is heated during normal operation. The thin wire is coated with gold nanoparticles (not shown). The thin wire of the fusible region 8 is approximately five times thinner than the heating element 6a and has a diameter or thickness of approximately 0.1 mm compared to a diameter of approximately 0.5 mm for the heating element 6a. It will be appreciated that in other embodiments the thin wire of the fusible region may be even thinner relative to the heating elements, such as up to ten times thinner or more. In these embodiments, the thin wire may have a diameter of between about 0.05 mm and about 0.1 mm, compared to a heating element diameter of between about 0.1 mm and about 0.5 mm.

Due to the low resistance of the fusible region 8, it does not melt when the heater assembly is heated normally, i.e. when electrical power is supplied to the heater assembly to generate aerosol. However, due to the presence of the gold nanoparticles, the fusible regions 8 are sensitive to a physical phenomenon called surface plasmon resonance which can be used to melt the fusible regions 8. When the fusible regions 8 are irradiated with light at a wavelength which is comparable to the size of the nanoparticle, the free electrons of the nanoparticles are excited and a coherent oscillation of those electrons takes place. In order to relax to their initial state, the nanoparticle loses its surplus energy in the form of heat. Therefore, when the nanoparticle is exhibiting surface plasmon resonance, thermal energy is generated. For gold nanoparticles, the light wavelength should be approximately 530 nm (i.e. green light). This can raise the temperature of the fusible region up to 500 degrees centigrade. This is above the melting temperature of the thin wire of the fusible region 8 and causes the fusible region 8 to melt and break. Consequently, the electrical circuit through the heating element is broken at the location of the fusible region 8. By activating i.e. melting, selected fusible regions 8, an area of the heater assembly 6 can be deactivated or electrically isolated from the heating process.

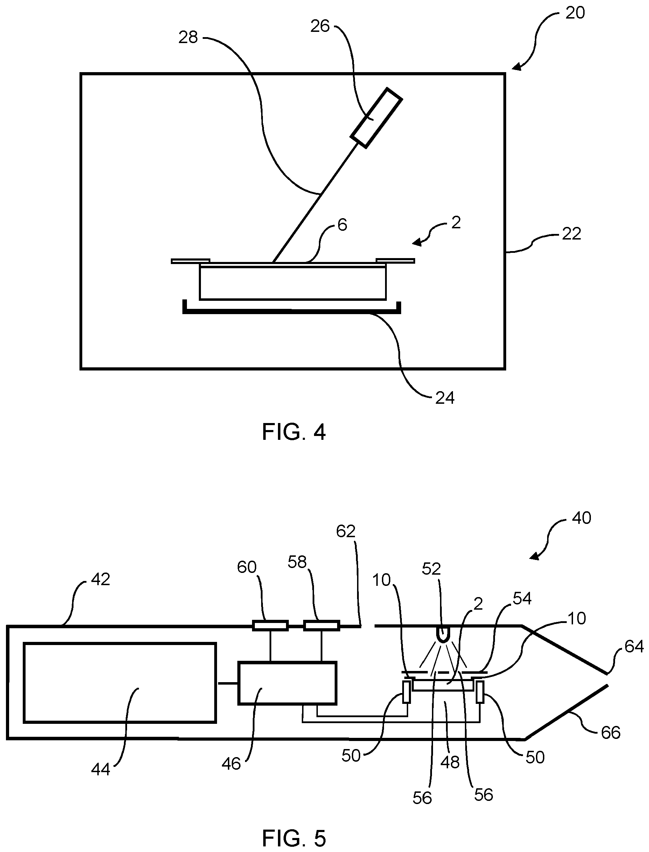

Referring to Figure 4, this shows a device 20 for selectively activating the fusible regions 8 (not shown in Figure 4) of the aerosol-generating article 2 of Figure 1 prior to heating of the heater assembly 6. The device 20 comprises a housing 22 enclosing a mount 24 for holding the aerosol-generating article 2 and a directional light source 26. The mount 24 is arranged to receive the aerosol-generating article 2 in a configuration in which the heater assembly 6 faces the directional light source 26. The mount 24 is sized and shaped to receive the aerosol-generating article with a tight fit such that the aerosol-generating article is held firmly and does not move relative to the mount 24. The aerosol-generating article 2 is shaped such that it is longer in one dimension than it is in another, so that it can only be received within the mount 24 in the correct orientation. Accordingly, the device 20 is able to determine the position of the aerosol-generating article 2 and the heater assembly 6 relative to the mount 24.

The directional light source 26 comprises a laser diode or a light emitting diode which is capable of emitting highly directional light at the required wavelength to achieve plasmon surface resonance in the fusible regions. The directional light source 26 is mounted on actuators (not shown) so that it can move relative to the mount 24. The actuators are controlled by control circuitry (not shown). The beam of light 28 emitted by the directional light source can be scanned over the surface of the heater assembly 6 and directed at individual fusible regions. This activates the fusible regions such that they exhibit surface plasmon resonance. The directional light source 26 therefore acts as an activation device for activating the fusible regions. The heat generated by surface plasmon resonance causes the fusible region to melt and break the electrical circuit at the location of the fusible region. By activating the fusible regions a selected area of the heater assembly 6 can be deactivated.

The device 20 can therefore be used prior to heating to selectively adjust the area of the heater assembly 6 which will be available for heating during a subsequent heating operation. Once the device 20 has adjusted the area of the heater assembly 6, the aerosol-generating article 2 can be removed from the device 20 and inserted into an aerosol-generating device. Upon heating, the aerosol-generating article 2 which generate an amount of aerosol proportional to the non-deactivated area of the heater assembly 6.

Figure 5 shows a handheld electrically-operated aerosol-generating device 40 in which a light source for selectively adjusting the area of the heater assembly of the aerosol-generating article is contained within the device. The device comprises a housing 42 containing a power source 44, control circuitry 46 and a space 48 for receiving the aerosol-generating article 2 of Figure 1. In Figure 5, an aerosol-generating article 2 has been received within the device and the contact pads 10 of the aerosol-generating article 2 engage corresponding contact pins 50 of the device 40. The contact pins 50 are connected to the control circuitry 46, which controls the supply of electrical power to the heater assembly of aerosol-generating article 2.

A light source 52 is arranged such that it 52 faces the heater assembly of the aerosol-generating article 2 in order to direct light at the heater assembly. The light source 52 is a light emitting diode and is spaced from the heater assembly such that it can expose the entire area of the heater assembly when it is illuminated. A mask 54 is attached to the aerosol-generating article 2 such that it covers the heater assembly and is arranged between the light source 52 and the aerosol-generating article 2.

The mask 54 is made from an opaque material such as a metal foil and has a low-tack pressure sensitive adhesive arranged on one surface. The adhesive is used to adhere it temporarily to the aerosol-generating article 2 but allows the mask to be removed without leaving a residue. The mask 54 has holes 56 corresponding to the location of fusible regions on the heater assembly which are to be activated. The opaque material of the mask 54 protects the fusible regions which are not to be activated from the light emitted by light source 52, whereas the holes 56 allow light to pass through the mask 54 to the fusible regions to activate them. The mask 54 can therefore be used to selectively adjust the area of the heater assembly prior to heating.

The light source 52 is controlled by a switch 58 connected to the control circuitry 46. The switch 58 can be operated by a user to cause the light source to illuminate and expose the heater assembly to light through the mask 54. A further switch 60 is provided for activating the heater assembly.

The device 40 further comprises an air inlet 62 arranged in the housing, upstream of the space 48 for receiving the aerosol-generating article 2, and an air outlet 64 arranged in a mouthpiece 66 downstream of the space 48 for receiving the aerosol-generating article 2. The device 40 provides an airflow pathway between the air inlet 62 and air outlet 64 which flows past the heater assembly of aerosol-generating article 2 when an aerosol-generating article is received within the device 40.

In use, a user places an aerosol-generating article 2 having a mask 54 covering its heater assembly within the device 40 and operates switch 58. This causes the light source 52 to illuminate and expose the mask 54 with light. An area of the heater assembly of the aerosol-generating article 2 is deactivated corresponding to the pattern of holes in the mask 54. The mask 54 is then removed from the aerosol-generating article 2 and when a user is ready to take a puff from the device 40, they place the mouthpiece 66 to their lips and press switch 60. This activates the heater assembly of the aerosol-generating article 2 which heats a portion of aerosol-forming substrate corresponding to the non-deactivated part of the heater assembly causing a predetermined amount of aerosol to be generated. The user then draws the aerosol into their mouth via air outlet 64.

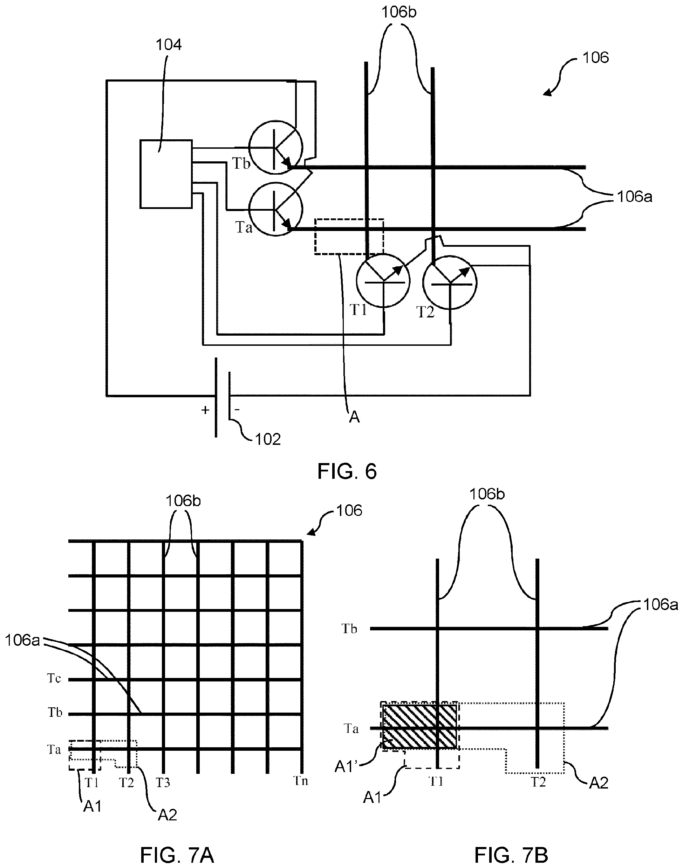

Figure 6 is a schematic view of part an aerosol-generating system according to another embodiment of the present invention. The aerosol-generating system comprises a heater assembly 106 comprising a two-dimensional array or grid of heating elements. The two-dimensional array of heating elements comprises a plurality of first heating elements 106a extending in a first direction and a plurality of second heating elements 106b extending in a second direction, which second direction is substantially orthogonal to the first direction such that the plurality of first heating elements 106a intersect the plurality of second heating elements 106b. The first 106a and second 106b heating elements are electrically connected at their points of intersection. In Figure 6, only two of the first heating elements 106a and only two of the second heating elements 106b are shown.

The first 106a and second 106b heating elements are coated with an aerosol-forming forming substrate, which, for the purposes of clarity, has been omitted from Figure 6. Any suitable aerosol-forming substrate may be used. For example, the heating elements 106a, 106b may be coated with a solid aerosol-forming substrate comprising tobacco granules or particles. Alternatively, the heating elements 106a, 106b may be coated with a gel-type aerosol-forming substrate comprising one or more additives such as nicotine, flavourings and aerosol formers.

Each of the heating elements in the first direction 106a and each of the heating elements in the second direction 106b is connected to a separate transistor Ta, Tb, T1 and T2, respectively. In the embodiment of Figure 6, bipolar transistors are used and the following description uses the terminology for bipolar transistors. However, it will be appreciated that other types of transistor can be used, for example, field-effect transistors.

The first heating elements 106a are connected to the emitter of their respective transistor Ta, Tb. The collectors of transistors Ta and Tb are connected to the positive terminal of a power source 102. The second heating elements 106b are connected to the collector of their respective transistor T1, T2. The emitters of transistors T1 and T2 are connected to the negative or ground terminal of the power source 102. The bases of all the transistors Ta, Tb, T1 and T2 are connected to control circuitry 104, which may include one or more microcontrollers.

The control circuitry 104 controls the supply of electrical current to the bases of transistors Ta, Tb, T1 and T2. When an electrical current is allowed to flow to the base of a transistor Ta, Tb, T1 and T2, the transistor is switched on. The transistors Ta, Tb, T1 and T2 therefore act as electronic switches which control the flow of current through their respective heating elements 106a, 106b. The control circuitry 104 controls the supply of electrical current from the power source to the heater assembly by controlling the activation of each of the transistors Ta, Tb, T1 and T2 individually such that an area of the heater assembly 106 can be selectively activated during heating to heat a portion of the aerosol-forming substrate (not shown) corresponding to the activated part of the heater assembly. For example, in Figure 6, if the control circuitry 104 activates transistors Ta and T1, this causes an electrical current to flow from the positive terminal of the power source 102 via the collector of transistor Ta to the emitter of transistor T1 and back to the negative or ground terminal of the power source 102 and results in the area A of the heater assembly 106 (denoted by a dotted outline in Figure 6) to be heated. This arrangement therefore allows the amount of aerosol generated to be controlled. A new part of the heater assembly 106 is activated each time the user takes a puff. This arrangement also allows multiple areas of the heater assembly to be successively activated to generate the required amount of aerosol, for example, by activating transistor Ta and transistor T1 and then activating transistor Ta and T2, etc.

Figure 7A is a schematic view of the complete heater assembly 106 of the aerosol-generating system of Figure 6. The heater assembly 106 comprises a two-dimensional array of heating elements comprising a plurality of first heating elements 106a extending in a first direction and a plurality of second heating elements 106b extending in a second direction, which is substantially orthogonal to the first direction. Each heating element 106a, 106b is connected to its own transistor (not shown in Figure 7A but denoted by reference numerals Ta, Tb, Tc, etc. and T1, T2, T3... Tn, etc.). The transistors Ta, Tb, Tc, T1, T2, T3... Tn, etc. control the flow of electrical current through their respective heating elements 106a, 106b.

The heating elements 106a, 106b are coated with an aerosol-forming substrate, which, has been omitted from Figure 7A for the purposes of clarity. Any suitable aerosol-forming substrate may be used and examples are provided above in the description of Figure 6.

The aerosol-forming substrate is divided into units A1, A2, which units define the amount of aerosol-forming substrate which can be individually heated by a pair of transistors. The amount of aerosol-forming substrate within each unit is configured such that the amount of aerosol generated by each unit is known. The amount of aerosol generated by a single unit is less than the amount of aerosol required for one puff or draw and is preferably a fraction of the amount of aerosol required for one puff or draw. The aerosol-generating system therefore successively or simultaneously heats a determined number of units to fulfil the aerosol quantity selected for a user's puff or draw.

For example, if the embodiment of Figure 7A were to successively heat units of aerosol-forming substrate, the aerosol-generating system could firstly activate transistors Ta and T1 to make a first electric circuit which heats unit A1. It could then activate transistors Ta and T2 to make a second electric circuit which heats unit A2. Indeed, it could heat all of the units of aerosol-forming substrate along the heating element 106a connected to transistor Ta by activating transistor Ta and successively activating transistors T1 to Tn. The process could then be repeated for all of the units of aerosol-forming substrate along the heating element 106a connected to transistor Tb by activating transistor Tb and successively activating transistors T1 to Tn and so on.

Figure 7B is an enlarged view of the bottom left-hand corner of Figure 7A showing the units A1, A2 of aerosol-forming substrate which can be individually heated by a pair of transistors in more detail. Unit A1 of the aerosol-forming substrate corresponds to the activation of transistors Ta and T1 and Unit A2 of the aerosol-forming substrate corresponds to the activation of transistors Ta and T2.

As can be seen from Figure 7B, during the successive heating of units of aerosol-forming substrate, some areas of the heater assembly 106 which have already been activated are activated again when adjacent areas are activated. For example, area A1', which is part of unit A1 is activated when transistors Ta and T1 are activated and is activated again when transistors Ta and T2 are activated. However, area A1' has already been depleted of aerosol-forming substrate during the activation of transistors Ta and T1. Therefore the effective area of unit A2 is the area of A2 minus the area A1'. Accordingly, the effective area of unit A2 is similar to the area of unit A1. The two-dimensional array of heating elements 106a, 106b consequently results in the aerosol-forming substrate being divided up into approximately equally sized units. This makes scaling up the amount of aerosol generated more straightforward. For example, if a situation requires twice as much aerosol as is generated with one unit, the aerosol-generating system can simply heat two units.

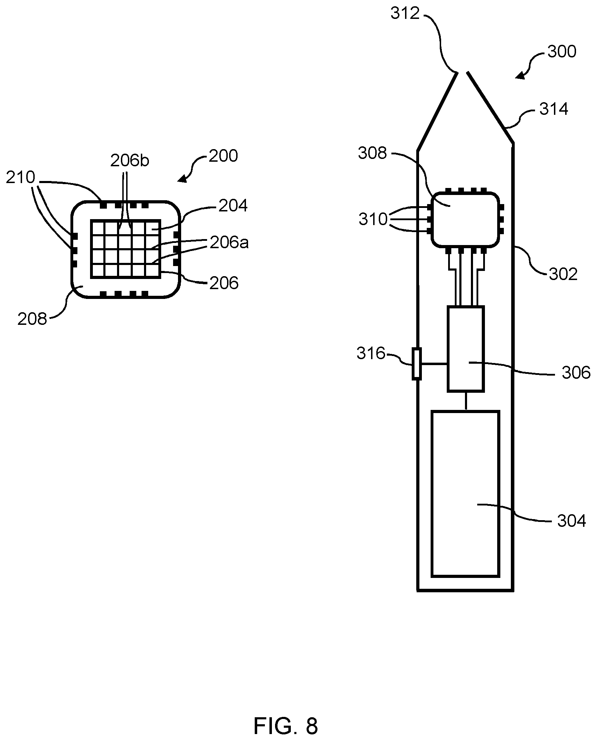

Figure 8 shows an aerosol-generating system comprising an aerosol-generating article 200 and an aerosol-generating device 300 for use with the aerosol-generating article 200. For clarity, the aerosol generating article is drawn to a larger scale than the aerosol-generating device.

The aerosol-generating article 200 comprises an aerosol-forming substrate 204 and a heater assembly 206 which are both held within a support 208. The heater assembly 206 comprises a two-dimensional array of heating elements 206a, 206b and is configured in the same way as the heater assemblies of Figures 6 and 7A. That is, each heating element 206a, 206b is connected to a transistor (not shown) which controls the flow of electrical current through its respective heating element 206a, 206b. The aerosol-generating article 200 further comprises a plurality of electrical contacts 210 arranged around its periphery for connecting to the transistors and heating elements 206a, 206b. The electrical contacts 210 are arranged to connect to corresponding electrical contacts 310 within the aerosol-generating device 300.

In the embodiment of Figure 8, the transistors (not shown) are located on or within the support 208 of the aerosol-generating article 200 between the electrical contacts 210 and the heating elements 206a, 206b. However, in other embodiments, the transistors could be part of the device 300, for example, the transistors could be located between the control circuitry 306 and the electrical contacts 310.

The aerosol-generating device 300 comprises a housing 302 containing a power source 304, control circuitry 306 and a space 308 for receiving the aerosol-generating article 200. As mentioned above, the aerosol-generating device 300 comprises electrical contacts 310 for connecting to the corresponding electrical contacts 210 of the aerosol-generating article 200. The electrical contacts 310 are arranged around the periphery of the recess 308 and are each connected to the control circuitry 306. For the purposes of clarity, Figure 8 shows the connections between the control circuitry 306 and the electrical contacts 310 for only four of the electrical contacts 310.

The control circuitry 306 controls the supply of electrical power to the heater assembly 206 of aerosol-generating article 200. The control circuitry 306 comprises a wireless communication module (not shown) and a memory (not shown). The wireless communication module allows information relating to the user and the type of aerosol-generating article 200 to be transmitted to the aerosol-generating device 300. This information will include, for example, the amount of aerosol or aerosol components to generate for a particular user and the type of aerosol-forming substrate being heated. This information is then stored in the memory and, based on this information, the control circuitry 306 is able to determine what area of the heater assembly 206 of the aerosol-generating article 200 to activate. The aerosol-generating device also comprises a switch 316 which is connected to the control circuitry and which is operated by a user to activate the heater assembly 206 of the aerosol-generating article 200 when the aerosol-generating article 200 is received within the device 300.

The device 300 further comprises an air inlet (not shown) arranged in the housing 302 upstream of the recess 308 for receiving the aerosol-generating article 200 and an air outlet 312 arranged in a mouthpiece 314 downstream of the recess 308 for receiving the aerosol-generating article 2. The device 300 provides an airflow pathway between the air inlet and air outlet 312 which flows past the heater assembly 206 of the aerosol-generating article 200 when the aerosol-generating article 200 is received within the device 300.

In use, a user places an aerosol-generating article 200 in the aerosol-generating device 300 and when the user is ready to take a puff from the device 300, they place the mouthpiece 314 to their lips and press switch 316. This activates a selected area of the heater assembly 206 of the aerosol-generating article 200 to heat a portion or a certain number of units of the aerosol-forming substrate 204 corresponding to the required amount of aerosol to be generated. The user then draws the aerosol into their mouth via air outlet 312.

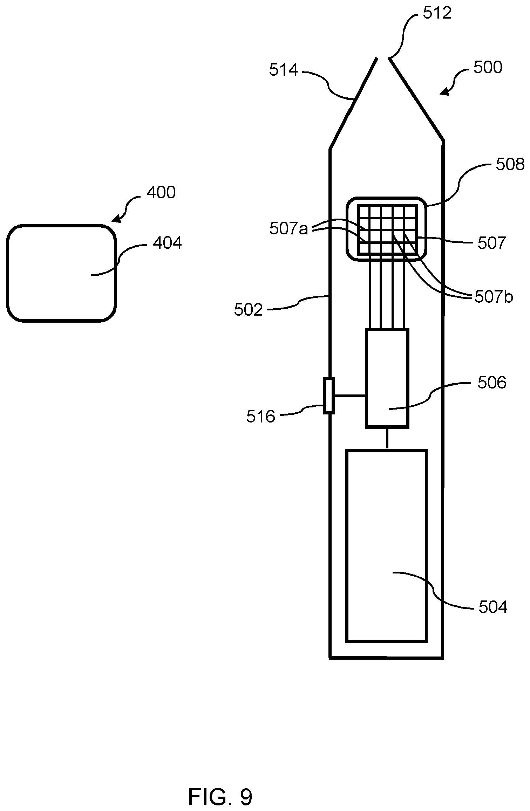

Figure 9 shows an aerosol-generating system comprising an aerosol-generating article 400 and an aerosol-generating device 500 for use with the aerosol-generating article 400. For clarity, the aerosol generating article is drawn to a larger scale than the aerosol-generating device. The aerosol-generating system of Figure 9 differs from that of Figure 8 in that the heater assembly 507 is not located in the aerosol-generating article 400 but in the device 500. However, the aerosol-generating system of Figure 9 uses the same principle of operation as that of Figure 8.

The aerosol-generating article 400 comprises an aerosol-forming substrate 404 which is shaped like a tablet and is configured to be received within a correspondingly-shaped recess 508 in the aerosol-generating device 500. Any suitable aerosol-forming substrate 204 can be used. For example, the aerosol-forming substrate 404 could be a solid tablet comprising tobacco cast leaves or the aerosol-forming substrate 404 could comprise a polymer or metallic foam which is impregnated with a liquid or gel or a combination of both containing one or more additives such as aerosol formers, nicotine and flavourings.

The aerosol-generating device 500 comprises a housing 502 containing a power source 504, control circuitry 506 and a recess 508 for receiving the aerosol-generating article 400. As mentioned above, the recess 508 is shaped to receive the aerosol-generating article 400.

A heater assembly 507 is arranged in the base of the recess 508. The heater assembly 507 comprises a two-dimensional array of heating elements 507a, 507b and is configured in the same way as the heater assemblies of Figures 6, 7A and 9. That is, each heating element 507a, 507b is connected to a transistor (not shown) which controls the flow of electrical current through its respective heating element 507a, 507b. The transistors for the heating elements 507a, 507b are each connected to the control circuitry 506. For the purposes of clarity, Figure 9 omits the transistors and only shows connections between the heating elements 507a, 507b and the control circuitry 506. Again, for the purposes of clarity, only four of the connections are shown.

The control circuitry 506 controls the supply of electrical power to the heater assembly 507. The control circuitry 506 comprises a wireless communication module (not shown) and a memory (not shown). The wireless communication module allows information relating to the user and the type of aerosol-generating article 400 to be transmitted to the aerosol-generating device 500. This information will include, for example, the amount of aerosol or aerosol components to generate for a particular user and the type of aerosol-forming substrate being heated. This information is then stored in the memory and, based on this information, the control circuitry 506 is able to determine what area of the heater assembly 507 to activate. The aerosol-generating device also comprises a switch 516 which is connected to the control circuitry and which is operated by a user to activate the heater assembly 507 when the aerosol-generating article 400 is received within the device 500.

The device 500 further comprises an air inlet (not shown) arranged in the housing 502 upstream of the recess 508 for receiving the aerosol-generating article 400 and an air outlet 512 arranged in a mouthpiece 514 downstream of the recess 508 for receiving the aerosol-generating article 400. The device 500 provides an airflow pathway between the air inlet and air outlet 512 which flows past the aerosol-generating article 400 when the aerosol-generating article 400 is received within the device 500.

In use, a user places an aerosol-generating article 400 in the aerosol-generating device 500 and when the user is ready to take a puff from the device 500, they place the mouthpiece 514 to their lips and press switch 316. This activates a selected area of the heater assembly 507 to heat a portion or a certain number of units of the aerosol-forming substrate 404 of the aerosol-generating article 400 corresponding to the required amount of aerosol to be generated. The user then draws the aerosol into their mouth via air outlet 512.

## Claims

1. An aerosol-generating article (2) comprising:
an aerosol-forming substrate (4); and
a heater assembly (6) arranged to heat the aerosol-forming substrate (4), the heater assembly (6) comprising an array of heating elements (6a, 6b);
wherein a plurality of the heating elements (6a, 6b) of the array each comprise at least one circuit-breaker component (8);
wherein each of the circuit-breaker components (8) is individually activatable to selectively deactivate an area of the heater assembly (6) prior to heating such that, upon heating, the aerosol-generating article (2) selectively heats a portion of the aerosol-forming substrate (4) corresponding to a non-deactivated part of the heater assembly (6).

2. An aerosol-generating article (2) according to claim 1, wherein each of the circuit-breaker components (8) comprises a fusible region which is configured to melt at a predetermined temperature to break the heating element.

3. An aerosol-generating article (2) according to claim 2, wherein the fusible region (8) comprises metallic nanoparticles arranged to receive light from a light source and generate heat by surface plasmon resonance to raise the temperature of the fusible region (8) to the predetermined temperature.

4. An aerosol-generating article (2) according to claim 2 or 3, wherein at least a proportion of the fusible regions (8) are arranged to surround a predetermined area of the heater assembly (6) to be deactivated.

5. An aerosol-generating article (2) according to claim 3 or 4, further comprising a mask (54) arranged to cover the heater assembly (6), wherein the mask (54) comprises a pattern of holes or transparencies (56) such that only fusible regions (8) at locations corresponding to the locations of the holes or transparencies (56) in the mask (54) are activated when exposed to a light source.

6. A device (20, 40) for use with the aerosol-generating article (2) of any of claims 1 to 5, wherein the device (20, 40) is configured to receive the aerosol-generating article (2), the device (20, 40) comprising:
control circuitry (46); and
an activation device (26, 52) for activating one or more of the circuit-breaker components (8);
wherein the control circuitry (46) is configured to control the activation device (26, 52) to activate one or more of the circuit-breaker components (8) when an aerosol-generating article (2) is received in the device (20, 40), such that a selected area of the heater assembly (6) is deactivated prior to heating.

7. A device (20, 40) according to claim 6, wherein the activation device (26, 52) is a light source and wherein the control circuitry (46) is configured to control the light source (26, 52) to expose one or more of the fusible regions (8) to light when an aerosol-generating article (2) according to any one of claims 3 to 5 is received in the device (20, 4) such that heat is generated in the fusible regions (8) by surface plasmon resonance to raise the temperature of the fusible region (8) to a predetermined temperature at which the fusible region (8) melts to break the heating element.

8. A device (20, 40) according to claim 6 or 7, wherein the device is an aerosol-generating device (40) further comprising a power source (44), wherein the control circuitry (46) is configured to control a supply of power from the power source (44) to the heater assembly (6) when an aerosol-generating article (2) is received in the device (40) to selectively heat a portion of the aerosol-forming substrate (4) corresponding to a non-deactivated part of the heater assembly (6).

9. An aerosol-generating system comprising:
an aerosol-forming substrate (204, 404); and
a heater assembly (206, 507) arranged to heat the aerosol-forming substrate, the heater assembly comprising an array of heating elements (106a, 106b, 206a, 206b, 507a, 507b);
wherein the system further comprises:
a power source (304, 504);
an electronic switch (Ta, Tb, T1, T2) for each of the heating elements, each electronic switch being connected to its respective heating element and the power source to control a flow of electrical current through its respective heating element; and
control circuitry (306, 506);
wherein the control circuitry (306, 506) is configured to control a supply of electrical current from the power source (304, 504) to the heater assembly (206, 507) by controlling the activation of each of the electronic switches (Ta, Tb, T1, T2) individually such that an area of the heater assembly can be selectively activated during heating to heat a portion of the aerosol-forming substrate (204, 404)corresponding to the activated part of the heater assembly;
wherein the array of heating elements (106a, 106b, 206a, 206b, 507a, 507b) comprises a two-dimensional array of heating elements having a plurality of first heating elements (106a, 206a, 507a) extending in a first direction and a plurality of second heating elements (106b, 206b, 507b) extending in a second direction, wherein the second direction is transverse to the first direction such that the plurality of second heating elements intersect the plurality of first heating elements, and wherein the first and second heating elements are electrically connected at their points of intersection; and
wherein an area of the heater assembly (206, 507) is selectively activated by activating one of the electronic switches (Ta, Tb) connected to a first heating element (106a, 206a, 507a) in combination with one of the electronic switches (T1, T2) connected to a second heating element (106b, 206b, 507b).

10. An aerosol-generating system according to claim 9, wherein the aerosol-forming substrate (204), heater assembly (206) and electronic switches form part of an aerosol-generating article (200);
wherein the power source (304) and the control circuitry (306) form part of an aerosol-generating device (300) configured to receive the aerosol-generating article (200); and
wherein the aerosol-generating device (300) comprises an electrical contact (310) for each of the electronic switches, each electrical contact (310) being arranged to electrically connect to its respective electronic switch when the aerosol-generating article (200) is received in the aerosol-generating device (300).

11. An aerosol-generating system according to claim 9 or 10, wherein the aerosol-forming substrate (404) forms at least part of an aerosol-generating article (400), wherein the heater assembly (507), electronic switches, power source (504) and the control circuitry (506) form part of an aerosol-generating device (500) configured to receive the aerosol-generating article (400).

12. An aerosol-generating system according to any of claims 9 to 11, wherein each electronic switch (Ta, Tb, T1, T2) comprises a transistor.

13. An aerosol-generating article (2) according to any of claims 1 to 5 or an aerosol-generating system according to any of claims 9 to 14, wherein the aerosol-forming substrate (4, 204, 404) extends across the heater assembly (6, 206, 507) and is divided into units, each unit corresponding to an activatable area of the heater assembly.

## Patentansprüche

1. Aerosolerzeugender Artikel (2), aufweisend:
ein aerosolbildendes Substrat (4); und
eine Heizvorrichtungsbaugruppe (6), die angeordnet ist, um das aerosolbildende Substrat (4) zu erwärmen, die Heizvorrichtungsbaugruppe (6) aufweisend eine Anordnung von Heizelementen (6a, 6b);
wobei eine Mehrzahl der Heizelemente (6a, 6b) der Anordnung jeweils wenigstens eine Leistungsschalterkomponente (8) aufweist;
wobei jede der Leistungsschalterkomponenten (8) individuell aktivierbar ist, um selektiv einen Bereich der Heizvorrichtungsbaugruppe (6) vor einem Erwärmen zu deaktivieren, sodass bei dem Erwärmen der aerosolerzeugende Artikel (2) selektiv einen Abschnitt des aerosolbildenden Substrats (4) erwärmt, der einem nicht deaktivierten Teil der Heizvorrichtung (6) entspricht.

2. Aerosolerzeugender Artikel (2) nach Anspruch 1, wobei jede der Leistungsschalterkomponenten (8) eine schmelzbare Region aufweist, die ausgelegt ist, bei einer vorbestimmten Temperatur zu schmelzen, um das Heizelement zu brechen.

3. Aerosolerzeugender Artikel (2) nach Anspruch 2, wobei die schmelzbare Region (8) metallische Nanopartikel aufweist, die angeordnet sind, Licht von einer Lichtquelle aufzunehmen und Wärme durch Oberflächenplasmonenresonanz zu erzeugen, um die Temperatur der schmelzbaren Region (8) auf die vorbestimmte Temperatur zu erhöhen.

4. Aerosolerzeugender Artikel (2) nach Anspruch 2 oder 3, wobei wenigstens ein Anteil der schmelzbaren Regionen (8) angeordnet ist, einen vorbestimmten Bereich der zu deaktivierenden Heizvorrichtungsbaugruppe (6) zu umgeben.

5. Aerosolerzeugender Artikel (2) nach Anspruch 3 oder 4, ferner aufweisend eine Maske (54), die angeordnet ist, die Heizvorrichtungsbaugruppe (6) zu bedecken, wobei die Maske (54) ein Muster von Löchern oder Transparenzen (56) aufweist, sodass nur schmelzbare Regionen (8) an Stellen, die den Stellen der Löcher oder Transparenzen (56) in der Maske (54) entsprechen, aktiviert werden, wenn sie einer Lichtquelle ausgesetzt werden.

6. Vorrichtung (20, 40) für einen Gebrauch mit dem aerosolerzeugenden Artikel (2) nach einem der Ansprüche 1 bis 5, wobei die Vorrichtung (20, 40) ausgelegt ist, den aerosolerzeugenden Artikel (2) aufzunehmen, die Vorrichtung (20, 40) aufweisend:
Regelschaltung (46); und
eine Aktivierungsvorrichtung (26, 52) für ein Aktivieren einer oder mehrerer der Leistungsschalterkomponenten (8);
wobei die Regelschaltung (46) ausgelegt ist, die Aktivierungsvorrichtung (26, 52) zu regeln, um eine oder mehrere der Leistungsschalterkomponenten (8) zu aktivieren, wenn ein aerosolerzeugender Artikel (2) in der Vorrichtung (20, 40) aufgenommen wird, sodass ein ausgewählter Bereich der Heizvorrichtungsbaugruppe (6) vor dem Erwärmen deaktiviert wird.

7. Vorrichtung (20, 40) nach Anspruch 6, wobei die Aktivierungsvorrichtung (26, 52) eine Lichtquelle ist und wobei die Regelschaltung (46) ausgelegt ist, die Lichtquelle (26, 52) zu regeln, um eine oder mehrere der schmelzbaren Regionen (8) dem Licht auszusetzen, wenn ein aerosolerzeugender Artikel (2) nach einem der Ansprüche 3 bis 5 in der Vorrichtung (20, 4) aufgenommen wird, sodass in den schmelzbaren Regionen (8) durch Oberflächenplasmonenresonanz Wärme erzeugt wird, um die Temperatur der schmelzbaren Region (8) auf eine vorbestimmte Temperatur zu erhöhen, bei der die schmelzbare Region (8) schmilzt, um das Heizelement zu brechen.

8. Vorrichtung (20, 40) nach Anspruch 6 oder 7, wobei die Vorrichtung eine Aerosolerzeugungsvorrichtung (40) ist, ferner aufweisend eine Energiequelle (44), wobei die Regelschaltung (46) ausgelegt ist, eine Versorgung mit Energie von der Energiequelle (44) zu der Heizvorrichtungsbaugruppe (6) zu regeln, wenn ein aerosolerzeugender Artikel (2) in der Vorrichtung (40) aufgenommen wird, um selektiv einen Abschnitt des aerosolbildenden Substrats (4) zu erwärmen, der einem nicht deaktivierten Teil der Heizvorrichtungsbaugruppe (6) entspricht.

9. Aerosolerzeugungssystem, aufweisend:
ein aerosolbildendes Substrat (204, 404); und
eine Heizvorrichtungsbaugruppe (206, 507), die angeordnet ist, das aerosolbildende Substrat zu erwärmen, die Heizvorrichtungsbaugruppe aufweisend eine Anordnung von Heizelementen (106a, 106b, 206a, 206b, 507a, 507b);
wobei das System ferner aufweist:
eine Energiequelle (304, 504);
einen elektronischen Schalter (Ta, Tb, T1, T2) für jedes der Heizelemente, jeder elektronische Schalter mit seinem jeweiligen Heizelement und der Energiequelle verbunden ist, um einen Fluss von elektrischer Energie durch sein jeweiliges Heizelement zu regeln; und
Regelschaltung (306, 506);
wobei die Regelschaltung (306, 506) ausgelegt ist, eine Versorgung mit Energie von der Energiequelle (304, 504) zu der Heizvorrichtungsbaugruppe (206, 507) zu regeln durch Regeln der Aktivierung jedes der elektronischen Schalter (Ta, Tb, T1, T2) einzeln, sodass ein Bereich der Heizvorrichtungsbaugruppe während des Erwärmens selektiv aktiviert werden kann, um einen Abschnitt des aerosolbildenden Substrats (204, 404) zu erwärmen, der dem aktivierten Teil der Heizvorrichtung entspricht;
wobei die Anordnung von Heizelementen (106a, 106b, 206a, 206b, 507a, 507b) eine zweidimensionale Anordnung von Heizelementen mit einer Mehrzahl von ersten Heizelementen (106a, 206a, 507a), die sich in einer ersten Richtung erstrecken, und einer Mehrzahl von zweiten Heizelementen (106b, 206b, 507b), die sich in einer zweiten Richtung erstrecken, aufweist, wobei die zweite Richtung quer zu der ersten Richtung verläuft, sodass sich die Mehrzahl von zweiten Heizelementen mit der Mehrzahl von ersten Heizelementen schneidet, und wobei die ersten und zweiten Heizelemente an ihren Schnittpunkten elektrisch verbunden sind; und
wobei ein Bereich der Heizvorrichtungsbaugruppe (206, 507) selektiv aktiviert wird durch Aktivieren eines der elektronischen Schalter (Ta, Tb), der mit einem ersten Heizelement (106a, 206a, 507a) verbunden ist, in Kombination mit einem der elektronischen Schalter (T1, T2), der mit einem zweiten Heizelement (106b, 206b, 507b) verbunden ist.

10. Aerosolerzeugungssystem nach Anspruch 9, wobei das aerosolbildende Substrat (204), die Heizvorrichtungsbaugruppe (206) und die elektronischen Schalter einen Teil eines aerosolerzeugenden Artikels (200) bilden;
wobei die Energiequelle (304) und die Regelschaltung (306) einen Teil einer Aerosolerzeugungsvorrichtung (300) bilden, die ausgelegt ist, aerosolerzeugenden Artikel (200) aufzunehmen; und
wobei die Aerosolerzeugungsvorrichtung (300) einen elektrischen Kontakt (310) für jeden der elektronischen Schalter aufweist, wobei jeder elektrische Kontakt (310) angeordnet ist, mit seinem jeweiligen elektronischen Schalter elektrisch zu verbinden, wenn der aerosolerzeugende Artikel (200) in der Aerosolerzeugungsvorrichtung (300) aufgenommen wird.

11. Aerosolerzeugungssystem nach Anspruch 9 oder 10, wobei das aerosolbildende Substrat (404) wenigstens einen Teil eines aerosolerzeugenden Artikels (400) bildet, wobei die Heizvorrichtungsbaugruppe (507), die elektronischen Schalter, die Energiequelle (504) und die Regelschaltung (506) einen Teil einer Aerosolerzeugungsvorrichtung (500) bilden, die ausgelegt ist, den aerosolerzeugenden Artikel (400) aufzunehmen.

12. Aerosolerzeugungssystem nach einem der Ansprüche 9 bis 11, wobei jeder elektronische Schalter (Ta, Tb, T1, T2) einen Transistor aufweist.

13. Aerosolerzeugender Artikel (2) nach einem der Ansprüche 1 bis 5 oder ein Aerosolerzeugungssystem nach einem der Ansprüche 9 bis 14, wobei sich das aerosolbildende Substrat (4, 204, 404) über die Heizvorrichtungsbaugruppe (6, 206, 507) erstreckt und in Einheiten unterteilt ist, wobei jede Einheit einem aktivierbaren Bereich der Heizvorrichtung entspricht.

## Revendications

1. Article de génération d'aérosol (2) comprenant :
un substrat formant aérosol (4) ; et
un ensemble de chauffage (6) agencé pour chauffer le substrat formant aérosol (4), l'ensemble de chauffage (6) comprenant un réseau d'éléments de chauffage (6a, 6b) ;
dans lequel une pluralité d'éléments de chauffage (6a, 6b) du réseau comprennent chacun au moins un composant de disjoncteur (8) ;
dans lequel chacun des composants de disjoncteur (8) est activable individuellement pour désactiver sélectivement une surface de l'ensemble de chauffage (6) avant le chauffage de sorte que, lors du chauffage, l'article de génération d'aérosol (2) chauffe sélectivement une portion du substrat formant aérosol (4) correspondant à une partie non désactivée de l'ensemble de chauffage (6).

2. Article de génération d'aérosol (2) selon la revendication 1, dans lequel chacun des composants de disjoncteur (8) comprend une région fusible qui est configurée pour fondre à une température prédéterminée pour rompre l'élément de chauffage.

3. Article de génération d'aérosol (2) selon la revendication 2, dans lequel la région fusible (8) comprend des nanoparticules métalliques agencées pour recevoir de la lumière depuis une source lumineuse et générer de la chaleur par résonance plasmonique de surface pour élever la température de la région fusible (8) jusqu'à la température prédéterminée.

4. Article de génération d'aérosol (2) selon la revendication 2 ou 3, dans lequel au moins une proportion des régions fusibles (8) sont agencées pour entourer une surface prédéterminée de l'ensemble de chauffage (6) à désactiver.

5. Article de génération d'aérosol (2) selon la revendication 3 ou 4, comprenant en outre un masque (54) agencé pour recouvrir l'ensemble de chauffage (6), dans lequel le masque (54) comprend un motif de trous ou de transparences (56) de telle sorte que seules les régions fusibles (8) à des emplacements correspondant aux emplacements des trous ou transparences (56) dans le masque (54) sont activées lorsqu'elles sont exposées à une source lumineuse.

6. Dispositif (20, 40) destiné à être utilisé avec l'article de génération d'aérosol (2) selon l'une quelconque des revendications 1 à 5, dans lequel le dispositif (20, 40) est configuré pour recevoir l'article de génération d'aérosol (2), le dispositif (20, 40) comprenant :
une circuiterie de commande (46) ; et
un dispositif d'activation (26, 52) pour activer un ou plusieurs des composants de disjoncteur (8) ;
dans lequel la circuiterie de commande (46) est configurée pour commander le dispositif d'activation (26, 52) pour activer un ou plusieurs des composants de disjoncteur (8) lorsqu'un article de génération d'aérosol (2) est reçu dans le dispositif (20, 40), de sorte qu'une surface sélectionnée de l'ensemble de chauffage (6) est désactivée avant le chauffage.

7. Dispositif (20, 40) selon la revendication 6, dans lequel le dispositif d'activation (26, 52) est une source lumineuse et dans lequel la circuiterie de commande (46) est configurée pour commander la source lumineuse (26, 52) pour exposer une ou plusieurs des régions fusibles (8) à de la lumière lorsqu'un article de génération d'aérosol (2) selon l'une quelconque des revendications 3 à 5 est reçu dans le dispositif (20, 4) de sorte que de la chaleur est générée dans les régions fusibles (8) par résonance plasmonique de surface pour élever la température de la région fusible (8) jusqu'à une température prédéterminée à laquelle la région fusible (8) fond pour rompre l'élément de chauffage.

8. Dispositif (20, 40) selon la revendication 6 ou 7, dans lequel le dispositif est un dispositif de génération d'aérosol (40) comprenant en outre une source de puissance (44), dans lequel la circuiterie de commande (46) est configurée pour commander une alimentation en puissance depuis la source de puissance (44) vers l'ensemble de chauffage (6) lorsqu'un article de génération d'aérosol (2) est reçu dans le dispositif (40) pour chauffer sélectivement une portion du substrat formant aérosol (4) correspondant à une partie non désactivée de l'ensemble de chauffage (6).

9. Système de génération d'aérosol comprenant :
un substrat formant aérosol (204, 404) ; et
un ensemble de chauffage (206, 507) agencé pour chauffer le substrat formant aérosol, l'ensemble de chauffage comprenant un réseau d'éléments de chauffage (106a, 106b, 206a, 206b, 507a, 507b) ;
dans lequel le système comprend en outre :
une source de puissance (304, 504) ;
un commutateur électronique (Ta, Tb, T1, T2) pour chacun des éléments de chauffage, chaque commutateur électronique étant raccordé à son élément de chauffage respectif et à la source de puissance pour commander une circulation de courant électrique à travers son élément de chauffage respectif ; et
une circuiterie de commande (306, 506) ;
dans lequel la circuiterie de commande (306, 506) est configurée pour commander une alimentation en courant électrique depuis la source de puissance (304, 504) vers l'ensemble de chauffage (206, 507) en commandant l'activation de chacun des commutateurs électroniques (Ta, Tb, T1, T2) individuellement de sorte qu'une surface de l'ensemble de chauffage peut être activée sélectivement pendant le chauffage pour chauffer une portion du substrat formant aérosol (204, 404) correspondant à la partie activée de l'ensemble de chauffage ;
dans lequel le réseau d'éléments de chauffage (106a, 106b, 206a, 206b, 507a, 507b) comprend un réseau bidimensionnel d'éléments de chauffage ayant une pluralité de premiers éléments de chauffage (106a, 206a, 507a) s'étendant dans une première direction et une pluralité de deuxièmes éléments de chauffage (106b, 206b, 507b) s'étendant dans une deuxième direction, dans lequel la deuxième direction est transversale à la première direction de telle sorte que la pluralité de deuxièmes éléments de chauffage coupe la pluralité de premiers éléments de chauffage, et dans lequel les premier et deuxième éléments de chauffage sont raccordés électriquement à leurs points d'intersection ; et
dans lequel une surface de l'ensemble de chauffage (206, 507) est activée sélectivement en activant l'un des commutateurs électroniques (Ta, Tb) raccordés à un premier élément de chauffage (106a, 206a, 507a) en combinaison avec l'un des commutateurs électroniques (T1, T2) raccordés à un deuxième élément de chauffage (106b, 206b, 507b).

10. Système de génération d'aérosol selon la revendication 9, dans lequel le substrat formant aérosol (204), l'ensemble de chauffage (206) et les commutateurs électroniques font partie d'un article de génération d'aérosol (200) ;
dans lequel la source de puissance (304) et la circuiterie de commande (306) font partie d'un dispositif de génération d'aérosol (300) configuré pour recevoir l'article de génération d'aérosol (200) ; et
dans lequel le dispositif de génération d'aérosol (300) comprend un contact électrique (310) pour chacun des commutateurs électroniques, chaque contact électrique (310) étant agencé pour se raccorder électriquement à son commutateur électronique respectif lorsque l'article de génération d'aérosol (200) est reçu dans le dispositif de génération d'aérosol (300).

11. Système de génération d'aérosol selon la revendication 9 ou 10, dans lequel le substrat formant aérosol (404) forme au moins une partie d'un article de génération d'aérosol (400), dans lequel l'ensemble de chauffage (507), les commutateurs électroniques, la source de puissance (504) et la circuiterie de commande (506) font partie d'un dispositif de génération d'aérosol (500) configuré pour recevoir l'article de génération d'aérosol (400).

12. Système de génération d'aérosol selon l'une quelconque des revendications 9 à 11, dans lequel chaque commutateur électronique (Ta, Tb, T1, T2) comprend un transistor.

13. Article de génération d'aérosol (2) selon l'une quelconque des revendications 1 à 5 ou système de génération d'aérosol selon l'une quelconque des revendications 9 à 14, dans lequel le substrat formant aérosol (4, 204, 404) s'étend d'un côté à l'autre de l'ensemble de chauffage (6, 206, 507) et est divisé en unités, chaque unité correspondant à une surface activable de l'ensemble de chauffage.
